# EUROPEAN PATENT SPECIFICATION

(11) **EP 3 790 100 B1**
(45) Date of publication and mention of the grant of the patent: **11.10.2023**
(21) Application number: 19207097.7
(22) Date of filing: 05.11.2019
(51) Int. Cl.: H01M 10/613, H01M 10/6554, H01M 10/6556, B23K 26/24, C22C 21/02, F28F 21/08, F28F 3/04, F28F 3/12, C22C 21/00, F28D 1/03, H01M 10/625, B23K 103/10, B23K 101/00, B23K 101/36

(54) **BATTERY COOLING PLATE**
BATTERIEKÜHLPLATTE
PLAQUE DE REFROIDISSEMENT DE BATTERIE

(30) Priority: 03.09.2019 EP 19195061
(43) Date of publication of application: 10.03.2021
(73) Proprietor: Novelis Koblenz GmbH, 56070 Koblenz (DE)
(72) Inventor: SMEYERS, Axel Alexander Maria, 2220 Heist op den Berg (BE); KIRKHAM, Steven, 56235 Ransbach-Baumbach (DE); RITZ, Fabian, 56244 Ötzingen (DE); LANDGRAF, Florian, 41363 Jüchen (DE)
(74) Representative: Weickmann & Weickmann PartmbB

(56) References cited:
- EP-A1- 2 418 042
- CN-A- 107 171 037
- DE-A1-102017 202 552
- US-A1- 2016 160 355

## Description

### FIELD OF THE INVENTION

The invention relates to a battery cooling plate and to a method of manufacturing such a battery cooling plate. The invention further relates to a battery module incorporating such a battery cooling plate.

### BACKGROUND TO THE INVENTION

Rechargeable batteries such as batteries made up of several lithium-ion cells can be used in many applications, including for example, electric propulsion vehicle ("EV") and hybrid electric vehicle ("HEV") applications. These applications often require advanced battery systems that have high energy storage capacity and can generate large amounts of heat that needs to be dissipated. Battery thermal management of these types of systems generally requires that the maximum temperature of the individual cells be below a predetermined, specified temperature.

Cold plate heat exchangers are heat exchangers upon which a stack of adjacent battery cells or battery cell containers housing one or more battery cells are arranged for cooling and/or regulating the temperature of a battery unit. The individual battery cells or battery cell containers are arranged in face-to-face contact with each other to form the stack, the stack of battery cells or battery cell containers being arranged on top of a cold plate heat exchanger such that an end face or end surface of each battery cell or battery cell container is in surface-to-surface contact with a surface of the heat exchanger.

Heat exchangers for cooling and/or regulating the temperature of a battery unit can also be arranged in between the individual battery cells or battery cell containers that form the stack or battery unit, the individual heat exchangers being interconnected by common inlet and outlet manifolds. Heat exchangers that are arranged or "sandwiched" between the adjacent battery cells or battery cell containers in the stack may sometimes be referred to as inter-cell elements (e.g. "ICE" plate heat exchangers) or cooling fins.

Heat exchangers for cooling and/or regulating the temperature of a battery unit can also be arranged in thermal contact with the bottom surface of a battery cell or a battery pack.

Temperature uniformity across the surface of an individual battery cell as well as the temperature uniformity of all the cells in the battery pack is of importance since the battery is a chemical reaction of which its performance is significantly affected by the temperature at which it runs. A thermal gradient in the battery will cause some cells to charge and discharge faster than others, causing battery pack durability issues. Accordingly, temperature uniformity across the surface of the heat exchanger is an important consideration in the thermal management of battery units since temperature uniformity across the surface of the heat exchanger helps to ensure that the temperature differential between individual battery cells in the overall battery unit is kept to a minimum.

A "heat exchanger for battery thermal management application" or a "battery cell heat exchanger" or a "battery cell cooler" or a "battery cooling plate" are expressions in the art for equivalent or similar devices.

With increasing dimensions of battery cooling plates, for example exceeding dimensions of about 0.6 by about 0.6 meters, it becomes increasingly difficult to produce leak tight battery cooling plates in an economical mode. With increasing length of the required joint for the peripheral flange the battery cooling plate and the internal joints for forming the cooling channel(s) the successful use of a brazing operation for large volumes of battery cooling plates is no longer feasible.
DE 10 2017 202 552 A1 describes a cooling plate for batteries comprising at least two metal sections that are welded together and form a fluid flow passage allowing the circulation of cooling fluid. The metal sections may be made of aluminum, aluminum alloys, copper, copper alloys, stainless steel or metallized plastic.
CN 107171037 refers to a battery water-cooled plate which comprises an aluminum alloy flat tube with a water cooling channel, which is in contact with the surface of a battery, the inlet end and the outlet end of the flat tube are connected with a pipe joint, characterized in that the aluminum alloy flat tube is made of an aluminum alloy rod after hot extrusion, bending and stamping process.

### DESCRIPTION OF THE INVENTION

As will be appreciated herein below, except as otherwise indicated, aluminium alloy designations and temper designations refer to the Aluminium Association designations in Aluminium Standards and Data and the Registration Records, as published by the Aluminium Association in 2018 and are well known to the person skilled in the art. The temper designations are laid down in European standard EN515.

For any description of alloy compositions or preferred alloy compositions, all references to percentages are by weight percent unless otherwise indicated.

The term "up to" and "up to about", as employed herein, explicitly includes, but is not limited to, the possibility of zero weight-percent of the particular alloying element to which it refers. For example, up to about 0.2% Cr may include an alloy having no Cr.

The invention is defined by the appended claims.

It is an object of the invention to provide a battery cooling plate for a battery block that can efficiently cool batteries via a coolant, the battery cooling plate is of sufficient strength and corrosion resistance. It is a further object of the invention to provide a battery cooling plate having large dimensions and can be produced on a large scale in a reliable manner.

These and other objects and further advantages are met or exceeded by the present invention and providing a battery cooling plate comprising of a main body portion having opposed ends and a first and second outer surface each defining a primary heat transfer surface between said opposed ends,
- said main body portion comprising a first outer plate and a second outer plate;
- at least one fluid flow passage formed within said main body portion between said first and second outer plates;
- the fluid flow passage having a first end for inletting a fluid into said fluid passage and a second end for discharging said fluid from said fluid flow passage, said first and second ends defining a flow direction through said fluid flow passage;
- optionally an inlet manifold or duct in fluid communication with said first end and an outlet manifold or duct in fluid communication with said second end;
- each of said first and second outer plates has a central, generally planar portion surrounded by a peripheral flange;
- wherein the first and second outer plates have been joined or secured to each other, preferably at least at their respective peripheral flange and preferably also within the main body to form at least one fluid flow passage, by means of remote laser welding without filler wire; and the remote laser welding has been performed without the use of a protective shielding gas;
- wherein the first outer plate is made of a 3xxx-series aluminium alloy comprising Mn in a range of 0.5% to 1.5% and Mg is a range of up to 0.15%;
- wherein the second outer plate is made of a 3xxx-series aluminium alloy comprising Mn in a range of 0.5% to 1.5% and Mg is a range of up to 0.15%;
- wherein at least one of the first outer plate and the second outer plate, and preferably both the first and second outer plate, on its side facing said fluid flow passage is provide with a passivation layer
- and wherein the first outer plate (12) on its side facing said fluid flow passage (18) is further provided with a clad liner (22) of a 4xxx-series aluminium alloy having Mg up to 0.35%, the clad liner (22) being positioned between the 3xxx-series aluminium alloy and the passivation layer (13).

In accordance with the invention it has been found that this arrangement of a battery cooling plate provides for a good strength level and a corrosion resistance battery cooling plate. The battery cooling plate can be of large dimensions, for example of about 0.6 by about 0.6 meters or larger, and these can be produced in high volumes with very low reject rates. The use of remote laser welding is an important feature of the invention and ensures high-quality and leak tight joints with a very low porosity level in the fusion weld, even without the use of a protective shielding gas. The absence of the requirement for a protective shielding gas avoids the use of a closed chamber filled with a protective gas used to limit pore formation during the remote laser welding operation, and which closed chamber would otherwise increase costs and reduce productivity.

The use of remote laser welding in combination with at least one outer plate made from the defined 3xxx-series alloy having a passivation layer facing the other outer plate is an important feature of the invention and ensures high-quality and leak tight joints with a very low porosity level in the fusion weld. Pore formation could be significantly reduced by using low welding speed and keeping the weld pool molten for a longer period of time allowing evaporation elements to escape, but this has a very adverse effect on productivity. By the use of a passivation layer in combination with outer plates made from 3xxx-series aluminium alloy having a low Mg-content, the porosity level in the fusion weld after remote laser welding is very low, even at high line speeds of 10 m/min or higher making the process economical attractive, and it limits hot cracking and provides reliable leak tight joints of very long length. It has been found that by using the defined passivation layer the solidification path and the weld pool composition is altered in such a way that the porosity level in the fusion weld after remote laser welding is very low arriving and providing a reliable leak tight joint. The rejection rate during the production of a battery cooling plate of large dimensions is significantly lower compared to a battery cooling plate of similar design composed of two monolithic 3xxx-series aluminium alloy devoid of passivation layer and devoid of the optional further 4xxx-series clad liner, joined together by remote laser welding, whereas the quality of the joints is also improved.

Various passivation coatings can be successfully used. In an embodiment the passivation layer is a Ti-Zr based passivation layer. In a preferred embodiment the Ti-Zr based passivation layer is chromate-free as being a toxic component.

In an embodiment the sum of Ti and Zr in the applied passivation layer is 0.5 to 50 mg/m² to provide a thin layer or thin coating thickness of several tens of nanometers. In an embodiment the lower-limit is 1 mg/m², and preferably 3 mg/m². In an embodiment the upper-limit is 25 mg/m², preferably 20 mg/m², and more preferably 15 mg/m². The Ti and Zr are commonly applied using Ti-Zr-fluoride agents, with or without polymer additions. Examples of commercially available Ti-Zr-fluoride agents include Gardobond (registered trademark) X4591 and X4707 of Chemetall and Alodine (registered trademark) 4830 of Henkel.

In an embodiment the Ti to Zr ratio is in a range of 1 to 1.3. In a preferred embodiment the Ti to Zr ratio is in a range of 1.05 to 1.25, and more preferably 1.05 to 1.20.

The passivation layer can be applied by all techniques known in the art for applying passivation layers onto aluminium surfaces and includes immersion in a process bath and spraying, e.g. electro-static spraying.

In a preferred embodiment the aluminium surface onto which the passivation layer is applied, the aluminium surface is firstly cleaned, preferably by degreasing, more preferably by alkaline degreasing e.g. by alkaline spray or immersion, to remove residues of processing oils and lubricants. The degreasing is followed by pickling, preferably acid pickling e.g. by spray or immersion, to remove as much as possible the oxide film on the aluminium alloy surface generated by the earlier thermomechanical processing such as rolling and annealing treatments.

The use of a passivation layer, preferably in combination with the cleaning pretreatment of degreasing and etching, removes any oxide film, moisture and hydrocarbons which may be present on the surface of the aluminium alloy and ensures that any aluminium oxide remains equally distributed and very thin and without renewed absorption of hydrocarbons. Otherwise at the welding temperature hydrogen, water vapor, hydrocarbons and other hydrogen-bearing components in and on the outer-surface of the aluminium alloy material readily dissociate to produce hydrogen in atomic or nascent form which is readily soluble in molten aluminium. As the molten aluminium solidifies, any dissolved hydrogen that returns to molecular hydrogen may form bubbles causing adverse porosity in the solidified weld metal.

In an embodiment the passivation layer is applied on both faces of the first and second outer plate made from the 3xxx-series aluminium alloy. In this way it is ensured that all surfaces that may come into contact with the laser beam have been pretreated to supress pore formation in the solidified weld. In this case both partial penetration and full penetration of the laser beam weld zone from the first outer plate into the second outer plate are protected. Also, since most industrial scale passivation processes coat both faces of an aluminium sheet at the same, it is better to use sheets of which both faces are etched and passivated. Importantly this prevents also errors caused by a wrong positioning of the aluminium sheets in a subsequent forming or stamping operation making that the coated side would be positioned wrongly if one side only would have been pre-treated.

The first outer plate is made from a 3xxx-series aluminium alloy comprising of, in wt.%: 0.5% to 1.4% Mn, preferably 0.6% to 1.2% Mn, and up to 0.15% Mg. In an embodiment the Mg content is up to 0.06%, more preferably the Mg content is up to 0.045%, and most preferably up to 0.02%.

In an embodiment the first outer plate is made from a 3xxx-series aluminium alloy comprising of, in wt.%:
0.5% to 1.5% Mn, preferably 0.6% to 1.2%, and more preferably 0.6% to 1.0%, up to 0.7% Cu, and preferably up to 0.25% or in a range of 0.2% to 0.7%,
up to 0.15%, preferably up to 0.06% Mg, preferably up to 0.045% Mg, more preferably up to 0.02%, and most preferably the aluminium alloy is substantially free from Mg,
up to 0.9% Si, and preferably up to 0.5%, and more preferably up to 0.3%, up to 0.7% Fe, preferably up to 0.5%, and more preferably in a range of 0.1 % to 0.5%,
up to 0.2% Cr, preferably up to 0.09%, more preferably up to 0.04%,
up to 0.25% Zr, preferably up to 0.09%, more preferably up to 0.04%,
up to 0.2% Ti, preferably 0.03% to 0.2%, more preferably 0.03% to 0.12%, up to 1.2% Zn, preferably up to 0.4%, and more preferably up to 0.25%,
balance aluminium and impurities. Typically, impurities are each up to 0.05% maximum and in total about 0.25% maximum, and preferably in total not exceeding 0.15%. The use of higher strength 3xxx-series aluminium alloys can prevent that the cooling plates need additional supports creating additional weight to be able to carry the weight of the batteries or to prevent them from being damaged when batteries are inserted into the battery frame or battery tray creating good thermal contact between batteries and battery cooling plates. Or they enable the use of battery cooling plates being made of thinner outer sheets thereby providing less weight to the battery modules. By maintaining a low Mg level in combination with the use of a passivation layer the formation of welding crack is avoided as well as pore formation being supressed.

In particular the alloying element Mn and optional Cu provide the required strength to the outer plate material, both for the plate material itself as well as for the subsequent remote laser welded joint. However, if the Mn level is too high there is an increasing risk of the formation of undesirable large intermetallic phases. Cu can be a strengthening element in the aluminium alloy employed according to this invention, but it has been found that a too high level it may adversely affect the corrosion performance. In an embodiment the Cu content in the 3xxx-series alloy does not exceed about 0.25%, and more preferably is less than 0.15%, to limit hot cracking at very high line speeds. It is important to maintain a very low level of Mg in the 3xxx-series aluminium alloy to limit hot cracking and to control the porosity formation during the remote laser welding operation without the use of a filler wire in particular at high line speeds.

In an embodiment the second outer plate is made from the same 3xxx-series aluminium alloy as of the first outer plate.

In an embodiment the 3xxx-series aluminium alloy has a composition consisting of, in wt.%, 0.5% to 1.5% Mn, up to 0.7% Cu, up to 0.15% Mg, up to 0.9% Si, up to 0.7% Fe, up to 0.2% Cr, up to 0.25% Zr, up to 0.2% Ti, up to 1.2% Zn, balance aluminium and impurities, and with preferred narrower compositional ranges as herein described and claimed.

In an embodiment the 3xxx-series aluminium alloy of the first and second outer plate are provided in an O, H1x, or H2x temper, wherein x has a value from 1 to 8, such as for example the H14, H18, H22, H24 and H26 temper.

In an embodiment the subject first or second outer plate is provided in a H18 temper as this provides highest strength and only limited formability and is ideally suited for the outer plate not being substantially formed in a forming operation requiring a high deformation degree, for example as the case would be with deep drawing.

In an embodiment the subject first or second outer plate is provided in a H26 temper as this provides generally higher strength compared to O, H22 and H24 tempers, while having somewhat improved formability compared to the H18 temper.

In another embodiment the subject first or second plate is provided in a softer temper, e.g. O, H22 or H24, which allows the subject plate to be formed into the side of the battery cooling plate incorporating the channel(s) of the fluid flow passage.

In an embodiment the first and second outer plates have a thickness in a range of about 0.2 mm to 4 mm. A preferred lower-limit for the thickness is about 0.3 mm. A preferred upper-limit for the thickness is about 2 mm, and more preferably about 1.5 mm.

The first outer plate is made of a 3xxx-series aluminium alloy comprising Mn in a range of 0.5% to 1.5% and Mg is a range of up to 0.15%, and on its side facing said fluid flow passage is further provided with a clad liner of a 4xxx-series aluminium alloy having Mg up to 0.35%, the clad liner being positioned between the 3xxx-series aluminium alloy and the passivation layer.

In an embodiment both the first and second outer plate are made of a 3xxx-series aluminium alloy comprising Mn in a range of 0.5% to 1.5% and Mg is a range of up to 0.15%, and on its side facing said fluid flow passage each outer plate is further provided with a clad liner of a 4xxx-series aluminium alloy having Mg up to 0.35%, the clad liner being positioned between the 3xxx-series aluminium alloy and the passivation layer.

In an embodiment the clad liner is solely applied on the side of the first and second outer plates facing the at least one fluid flow passage formed within said main body portion between said first and second outer plates.

In accordance with the invention at least the first outer plate is provided with a clad liner of a 4xxx-series aluminium alloy having Mg up to 0.35% on its side facing the fluid flow passage or channel within the main body portion of the battery cooling plate.

In an embodiment also the second outer plate is provided with a clad liner of a 4xxx-series aluminium alloy having Mg up to 0.35% on its side facing the fluid flow passage or channel within the main body portion of the battery cooling plate.

In an embodiment the combined sum of the Mg content in 3xxx-series alloy of an outer plate and the 4xxx-series aluminium alloy clad liner provided thereon does not exceed 0.09%, preferably it does not exceed 0.07%. In an embodiment it does not exceed 0.05%. In a preferred embodiment it does not exceed 0.03%. As the thickness of the clad liner is much thinner than of the 3xxx-series alloy a somewhat higher Mg content can be tolerated, but the sum of the Mg content should be kept low to avoid pore formation in the solidified weld metal.

In an embodiment the thickness of the clad liner on the first outer place is in a range of 3% to 20% of the total plate thickness (thickness of the outer plate and the clad liner combined). A preferred lower-limit is 5% of the total plate thickness. A preferred upper-limit is 16% of the total plate thickness.

In an embodiment the thickness of the clad liner on the second outer place is in a range of 3% to 20% of the total plate thickness. A preferred lower-limit is 5% of the total plate thickness. A preferred upper-limit is 16% of the total plate thickness.

In an embodiment a 4xxx-series alloy clad liner is applied on each side or face of the first and second outer plates. This provides additional galvanic protection to the 3xxx-series alloy layer of the battery cooling plate.

In another embodiment the 4xxx-series alloy clad liner is applied on the side of the first and second outer plates facing the at least one fluid flow passage formed within said main body portion of the battery cooling plate, and whereby a corrosion protective liner of a different aluminium alloy is applied on the other face or side of at least the first or second outer plates, and preferably on each of the first or second outer plates. Such a corrosion protective liner could be made of an aluminium alloy having up to about 3.5% Zn, and preferably up to 2% Zn. A particular example of such an alloy would be the AA7072 alloy, or modifications thereof. Such a corrosion protective layer would preferably have a thickness in a range of 3% to 20% of the total plate thickness (thickness of the outer plate and all liners combined).

In accordance with the invention the clad liner is made from a 4xxx-series aluminium alloy having up to 0.35% Mg to facilitate the remote laser welding operation without a filler wire. When welded, said clad liner alloy mixes into the weld zone and prevents cracking. The clad liner material mixes with the 3xxx-series aluminium alloy of the first and second outer plate and the passivation layer within the weld pool.

In an embodiment the clad liner is made from a 4xxx-series aluminium alloy having about 5% to 14% Si and up to 0.35% Mg. More preferably the Si content is up to about 12%. The Mg level is preferably up to 0.10%, and more preferably up to 0.04%, and most preferably the aluminium alloy is substantially free from Mg. The balance is made by aluminium and unavoidable impurities, which in practical terms would mean up to 0.7% Fe, up to 0.25% Mn, preferably up to 0.15% Mn, up to 0.25% Cu, preferably up to 0.1% Cu, up to 0.25% Zn, preferably up to 0.1 % Zn, up to 0.1% Cr, preferably up to 0.05% Cr, up to 0.15% Ti, other impurities each <0.05% and total <0.2%, remainder aluminium.

In another embodiment the clad liner is made from a 4xxx-series aluminium alloy having about 5% to 14% Si, 0.25% to 4% Zn and up to 0.35% Mg. More preferably the Si content is up to about 12%. The Mg level is preferably up to 0.10%, and more preferably up to 0.04%, and most preferably the aluminium alloy is substantially free from Mg. The purposive addition of Zn to the clad liner ensures increased galvanic protection to the 3XXX-series aluminium alloy against. The Zn content is preferably up to 3.5%, and more preferably up to 3.0%. A preferred lower limit for the Zn content is 0.5%. The balance is made by aluminium and unavoidable impurities, which in practical terms would mean up to 0.7% Fe, up to 0.25% Mn, preferably up to 0.15% Mn, up to 0.25% Cu, preferably up to 0.1% Cu, up to 0.1% Cr, preferably up to 0.05% Cr, up to 0.15% Ti, other impurities each <0.05% and total <0.2%, remainder aluminium.

In an embodiment the 4xxx-series aluminium alloy clad liner further contains one or more wetting elements or elements modifying the surface tension of a molten Al-Si brazing material. Preferably the elements are selected from the group consisting of Be, Bi, Ce, La, Li, Na, Pb, Se, Sb, Sr, Th, and Y, and wherein the total amount of the wetting element(s) is in a range of about 0.005% to 0.8%. In a preferred embodiment the upper-limit for the total amount of wetting element(s) is about 0.5%, and more preferably about 0.25%.

In an embodiment Sr is added up to 500 ppm, preferably in a range of 50 ppm to 500 ppm.

In an embodiment Na is added up to 250 ppm, preferably in a range of 15 ppm to 200 ppm.

The clad liner can be applied to the 3xxx-series aluminium outer plate material via various techniques known in the art. For example, by roll bonding as is well known and most practised in the art. Alternatively the 3xxx-series alloy and clad liner can be manufactured simultaneously by means of co-casting techniques, for example as disclosed in international patent document WO-2004/112992-A2. In these embodiments the clad liner covers essentially the whole face or side of the 3xxx-series outer plate material.

In another embodiment the clad liner is applied substantially only along the path of a surface to be welded. The clad liner can be applied by spraying techniques, for example by thermal spraying as well as by means of cold spraying techniques (otherwise known as cold gas dynamic spraying). In the cold spraying approach, solid powders are accelerated in supersonic gas jets to velocities of between 200-100 meters per second. In cold spraying, the feedstock is not fed into a flame or arc but is instead fed into a gas stream. The transit time of the feedstock in the gas stream is not sufficient to cause melting of the feedstock. This has the advantages that the powder remains in the solid phase, lower substrate surface temperatures, less oxidation of the powder and the substrate material, no metallurgical transformations and reduced residual stress formation. The powder is accelerated and impacts on the substrate surface where local heating and bonding occur. By repeating this process, a near fully dense clad liner layer of defined thickness can be constructed.

Following the application of the clad liner onto the 3xxx-series aluminium alloy the passivation layer can be applied on the outer-surface of the clad 3xxx-series aluminium alloy.

In an embodiment the battery cooling plate incorporates dimples in the at least one fluid flow passage or cooling channel to provide more structural integrity to the passage or channel. Furthermore, such dimples may act as turbulators.

In an embodiment the battery cooling plate comprises more than one fluid flow passage, for example a first, second, and third fluid flow passage or cooling channel.

The invention further relates to a battery module ideally for an electric propulsion vehicle or a hybrid electric vehicle, the battery module comprising a battery pack including multiple battery cells, and at least one battery cooling plate according to the invention disposed in thermal contact with at least one adjacent battery cell whereby in operation a coolant can flow through the at least one fluid flow passage in the battery cooling plate to cool said adjacent battery cell(s). In practice this means for example that one of the outer surfaces of the battery cooling plate defining the primary heat transfer surface is in thermal contact with the bottom surface of a battery block or battery pack.

The invention relates also to a cold plate heat exchanger incorporating at least one battery cooling plate of this invention.

The invention relates also to an ICE plate heat exchanger incorporating at least one battery cooling plate of this invention.

The invention further relates to a method of manufacturing a battery cooling plate
according to this invention comprising the steps of:
- providing a sheet material for a first outer plate made of the 3xxx-series aluminium alloy provided on at least one face with a passivation layer as herein described and claimed;
- providing a sheet material for a second outer plate made of the 3xxx-series aluminium alloy and preferably provided on at least one face with a passivation layer as herein described and claimed;
- stamping a pair of complementary outer plates using one or more dies; depending on the design of the battery cooling plate, the first and second outer plates are symmetrical and each of the complementary plates is identical or alternatively the outer plates are asymmetrical;
- aligning the pair of complementary outer plates such that the passivation layer is facing the fluid flow passage or cooling channel within the main body portion of the battery cooling plate;
- optionally inserting inlet and outlet manifolds or ducts into receptacles formed on the outer plates;
- joining or securing by means of remote laser welding without a filler wire the pair of complementary outer plates, at least at their respective peripheral flange and preferably also within the main body to form at least one fluid flow passage, to form the battery cooling plate or battery cell cooler; the joining is by directing a laser beam at an area of an outer plate wherein the laser beam produces a narrow fusion zone in the area where it strikes the surface of the subject outer plate, the fusion zone extending through one of the first and second plate plates and at least partially through the adjoining one of the first and second outer plates, wherein the fusion zone contains a molten metal mixture comprising the 3xxx-series alloy of the first and second outer plate and of the passivation layer and of the optional 4xxx-series clad liner(s); and allowing the fusion zone to cool and solidify to form a weld joint or fusion weld between the first and second outer plates; and wherein preferably the remote laser welding is performed without the use of a protective shielding gas; the remote laser beam welding operation allows for line speeds in excess of 10 m/min enabling a high level of automation; and wherein the outer plates together form at least one fluid flow passage or channel, the fluid flow passage having an inlet end, an outlet end and preferably dimples or ribs along the length of the fluid flow passage, and the fluid flow passage preferably having an inlet manifold or duct and an outlet manifold or duct, the inlet manifold or duct being in fluid communication with the inlet of the fluid flow passage and the outlet manifold or duct being in fluid communication with the outlet end of the fluid flow passage.

The invention further relates to the use and to a method of use of the 3xxx-series aluminium alloy having a composition comprising of, in wt.%, 0.5% to 1.5% Mn, up to 0.7% Cu, up to 0.15% Mg, up to 0.9% Si, up to 0.7% Fe, up to 0.2% Cr, up to 0.25% Zr, up to 0.2% Ti, up to 1.2% Zn, balance aluminium and impurities, and with preferred narrower compositional ranges as herein described and claimed, and provided on at least one face with a passivation layer, preferably a Ti-Zr based passivation layer, as outer plate material for a battery cooling plate, preferably a first and second outer plates joined or secured to each other by means of remote laser welding without a filler wire.

### DESCRIPTION OF THE DRAWING

The invention shall now be described with reference to the appended drawings, in which:
Fig. 1 is a perspective view of a battery cooling plate according to an example embodiment according to the invention.
Fig. 2 is a perspective view of a battery cooling plate according to another example embodiment according to the invention.
Fig. 3A, and Fig. 3B is a schematic of the arrangement of the first and second outer plate before and after remote laser welding without a filler wire.

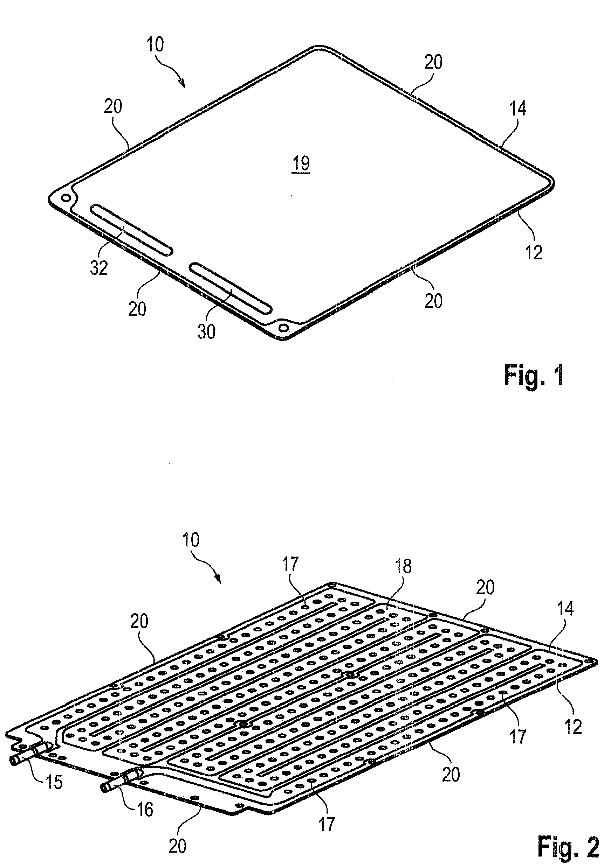

Referring to Fig. 1, there is shown an example embodiment of a battery cooling plate 10 according to an example embodiment of the present invention. As shown, the battery cooling plate 10 is comprised of a pair of outer plates 12,14. Outer plates 12,14 each define a central, generally planar portion 19 that is surrounded by a peripheral flange 20. It is desired that the battery cooling plate be flat or planar to maintain good thermal contact with an adjacent battery cells or battery packs (not shown). The central, generally planar portion 19 of each of the plates 12,14 projects out of the plane of the peripheral flange 20 so that when the outer plates 12,14 are assembled together, interior spaces or gaps are formed defining at least one fluid flow passage. The peripheral flange 20 of the respective outer plate 12,14 are joined or secured together by means of remote laser welding without filler wire in accordance with the invention providing a fluid tight seal. Inlet and outlet openings 30,32 are arranged along the end of the width of the plates 12,14. The inlet 30 opening can be provided with an inlet manifold or duct (not shown) in fluid communication with said inlet or first end and an outlet manifold or duct (not shown) in fluid communication with said outlet 32 or second end. The positioning of the inlet and outlet openings is not part of or critical to the present invention and may vary with the design of the battery cooling plate as in well-known to the skilled person in the art.

Referring to Fig. 2 there is shown an example embodiment of a battery cooling plate 10 according to another example embodiment of the present invention. As shown, the battery cooling plate 10 is comprised of a pair of outer plates 12,14. Outer plates 12,14 each define a central, generally planar portion defining a primary heat transfer surface that is surrounded by a peripheral flange 20. The central, generally planar portion of each of the plates 12,14 projects out of the plane of the peripheral flange 20 so that when the outer plates 12,14 are assembled together, interior spaces or gaps are formed defining at least one fluid flow passage or channel 18, in this case the fluid flow passage has a serpentine shaped flow passage, but many variations to this design are feasible and not limiting to this invention. The fluid flow passage 18 has dimples 17 positioned centrally along the length of the fluid flow passage 18 to provide more structural integrity to the flow passage and acts as turbulators enhancing the heat transfer efficiency. The peripheral flange 20 of the respective outer plate 12,14 are joined together by means of remote laser welding without filler wire in accordance with the invention providing a fluid tight seal. Also the fluid flow passage 19 is formed by joining together the outer plates 12,14 by means of remote laser welding without filler wire providing a fluid tight seal. Inlet and outlet openings are arranged along the end of the width of the plates 12,14. The inlet opening can be provided with an inlet duct 15 in fluid communication with said inlet or first end and an outlet duct 16 in fluid communication with said outlet or second end.

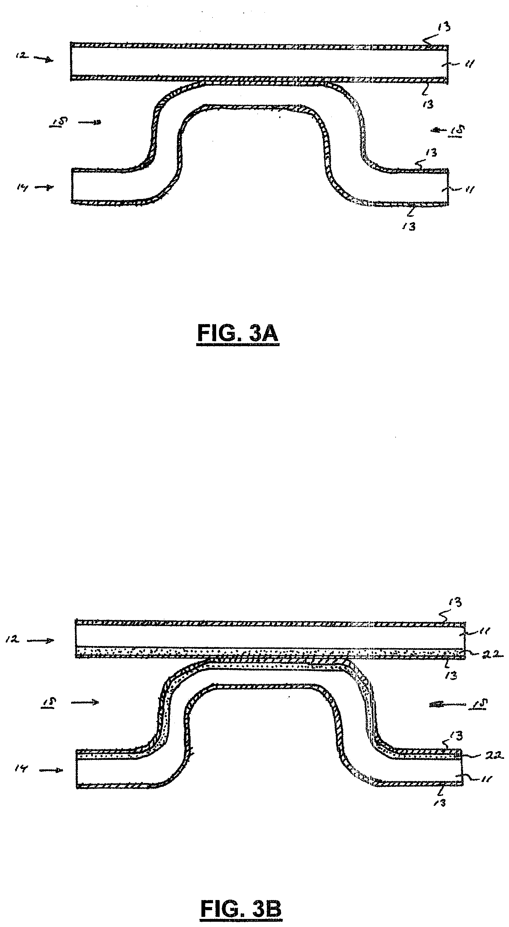

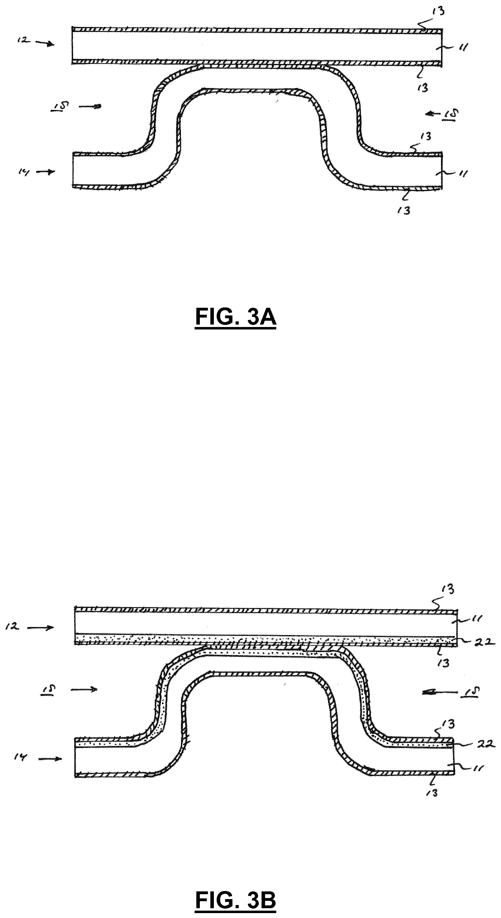

Referring to Fig. 3A there is shown schematically a first outer plate 12 and a second outer plate 14 each being made of a 3xxx-series aluminium alloy sheet 11 as herein described and claimed and provided on both faces with a very thin (several tens of nanometers) passivation layer 13. In this embodiment the first outer plate 12 is flat, whereas the second outer plate 14 has been formed, for example by means of deep drawing or stamping, to create or form the required shape of the fluid flow channel 18.

Referring to Fig. 3B there is shown schematically a first outer plate 12 and a second outer plate 14 each being made of a 3xxx-series aluminium alloy sheet 11 as herein described and claimed and on its respective side facing the fluid flow passage 18 is provided with a 4xxx-series clad layer 22. The outer faces of the first outer plate 12 and the second outer plate 14 are provided with a very thin passivation layer 13. In this embodiment also the first outer plate 12 is flat, whereas the second outer plate 14 has been formed, for example by means of deep drawing or stamping, to create or form the shape of the fluid flow channel 18.

## Claims

1. Battery cooling plate (10) comprising of a main body portion having opposed ends and a first and second outer surface each defining a primary heat transfer surface between said opposed ends,
- said main body portion comprising a first outer plate (12) and a second outer plate (14);
- at least one fluid flow passage (18) formed within said main body portion between said first and second outer plates (12, 14);
- the fluid flow passage (18) having a first end (30) for inletting a fluid into said fluid passage (18) and a second end (32) for discharging said fluid from said fluid flow passage (18), said first and second ends (30, 32) defining a flow direction through said fluid flow passage (18);
- each of said first and second outer plates (12, 14) has a central, generally planar portion (19) surrounded by a peripheral flange (20);
- wherein the first and second outer plates (12, 14) have been joined to each other by means of remote laser welding;
**characterized in that**
- the first outer plate (12) is made of a 3xxx-series aluminium alloy comprising Mn in a range of 0.5% to 1.5% and Mg is a range of up to 0.15%;
- the second outer plate (14) is made of a 3xxx-series aluminium alloy comprising Mn in a range of 0.5% to 1.5% and Mg is a range of up to 0.15%;
- the first outer plate (12), and preferably both the first and second outer plate (12, 14), on its side facing said fluid flow passage (18) is provided with a passivation layer (13)
- and the first outer plate (12) on its side facing said fluid flow passage (18) is further provided with a clad liner (22) of a 4xxx-series aluminium alloy having Mg up to 0.35%, the clad liner (22) being positioned between the 3xxx-series aluminium alloy and the passivation layer (13).

2. Battery cooling plate (10) according to claim 1, wherein said passivation layer (13) is a Ti-Zr passivation layer.

3. Battery cooling plate (10) according to claim 2, wherein said Ti-Zr passivation layer has a sum of Ti and Zr in a range of 0.5 to 50 mg/m², preferably 1 to 25 mg/m².

4. Battery cooling plate (10) according to claim 2 or 3, wherein the Ti/Zr ratio is 1 to 1.3.

5. Battery cooling plate (10) according to any one of claims 1 to 4, wherein the second outer plate (14) is made of a 3xxx-series aluminium alloy comprising Mn in a range of 0.5% to 1.5% and Mg is a range of up to 0.15%, and on its side facing said fluid flow passage (18) is further provided with a clad liner (22) of a 4xxx-series aluminium alloy having Mg up to 0.35%, the clad liner (22) being positioned between the 3xxx-series aluminium alloy and the passivation layer (13).

6. Battery cooling plate (10) according any one of claims 1 to 5, wherein the first outer plate (12) has a thickness in a range of 0.2 mm to 4 mm.

7. Battery cooling plate (10) according to any one of claims 1 to 6, wherein the second outer plate (14) has a thickness in a range of 0.2 mm to 4 mm.

8. Battery cooling plate (10) according to any one of claims 1 to 7, wherein the thickness of the clad liner (22) of the first outer plate (12) is in a range of 3% to 20% of the total outer plate thickness.

9. Battery cooling plate (10) according to any one of claims 5 to 8, wherein the thickness of the clad liner (22) of the second outer plate (14) is in a range of 3% to 20% of the total outer plate thickness.

10. Battery cooling plate (10) according to any one of claims 1 to 9, wherein the first outer plate (12) is made from a 3xxx-series aluminium alloy comprising, in wt. %,
0.5% to 1.5% Mn, preferably 0.6% to 1.2%,
up to 0.7% Cu,
up to 0.15% Mg,
up to 0.9% Si,
up to 0.7% Fe,
up to 0.2% Cr,
up to 0.25% Zr,
up to 0.2% Ti,
up to 1.2% Zn,
balance aluminium and impurities.

11. Battery cooling plate (10) according to any one of claims 1 to 10, wherein the second outer plate (14) is made from a 3xxx-series aluminium alloy comprising, in wt.%,
0.5% to 1.5% Mn, preferably 0.6% to 1.2%,
up to 0.7% Cu,
up to 0.15% Mg,
up to 0.9% Si,
up to 0.7% Fe,
up to 0.2% Cr,
up to 0.25% Zr,
up to 0.2% Ti,
up to 1.2% Zn,
balance aluminium and impurities.

12. Battery cooling plate (10) according to any one of claims 1 to 11, wherein the 3xxx-series aluminium alloy of the first and second outer plates (12, 14) are provided in a O, H1 or H2 temper.

13. Battery module comprising a battery pack including multiple spaced apart battery cells, and at least one battery cooling plate (10) according to any one of claims 1 to 12 disposed in thermal contact with at least one adjacent battery cell whereby in operation a coolant can flow through a fluid flow passage (18) in the battery cooling plate (10) to cool an adjacent battery cell.

14. Method of manufacturing a battery cooling plate (10) according to any one of claims 1 to 12, comprising the steps of,
- providing a sheet material (11) for a first outer plate (12) made of the 3xxx-series aluminium alloy provided at least on one face with a passivation layer (13) according to any one of claims 1 to 4;
- providing a sheet material (11) for a second outer plate (14) made of the 3xxx-series aluminium alloy and preferably provided at least on one face with a passivation layer (13) according to any one of claims 1 to 4;
- stamping a pair of complementary outer plates (12, 14) using one or more dies;
- aligning the pair of complementary outer plates (12, 14) such that the passivation layer (13) is facing the fluid flow passage or channel (18) within the main body portion of the battery cooling plate (10); and
- joining the pair of complementary outer plates (12, 14) by means of remote laser welding without a filler wire to form the battery cooling plate (10).

15. Method according to claim 14, further comprising the step of inserting inlet and outlet manifolds into receptacles formed on the outer plates (12, 14), and wherein the outer plates (12, 14) together form at least one fluid flow passage (18), the fluid flow passage (18) having an inlet end and an outlet end, and the fluid flow passage (18) having an inlet manifold and an outlet manifold, the inlet manifold being in fluid communication with the inlet of the fluid flow passage (18) and the outlet manifold being in fluid communication with the outlet end of the fluid flow passage (18).

## Patentansprüche

1. Batteriekühlplatte (10), umfassend einen Hauptkörperabschnitt mit gegenüberliegenden Enden und einer ersten und zweiten Außenfläche, die jeweils eine primäre Wärmeübertragungsfläche zwischen den gegenüberliegenden Enden definiert,
- wobei der Hauptkörperabschnitt eine erste Außenplatte (12) und eine zweite Außenplatte (14) umfasst;
- mindestens einen Fluidströmungsdurchgang (18) innerhalb des Hauptkörperabschnitts zwischen der ersten und der zweiten Außenplatte (12, 14) ausgebildet ist;
- wobei der Fluidströmungsdurchgang (18) ein erstes Ende (30) zum Einlassen eines Fluids in den Fluidströmungsdurchgang (18) und ein zweites Ende (32) zum Auslassen des Fluids aus dem Fluidströmungsdurchgang (18) umfasst, wobei das erste und zweite Ende (30, 32) eine Strömungsrichtung durch den Fluidströmungsdurchgang (18) definieren;
- jede der ersten und zweiten Außenplatten (12, 14) einen zentralen, im Allgemeinen ebenen Abschnitt (19) aufweisen, der von einem Umfangsflansch (20) umgeben ist;
- wobei die erste und zweite Außenplatte (12, 14) durch Remote-Laserschweißen miteinander verbunden worden sind;
**dadurch gekennzeichnet, dass**
- die erste Außenplatte (12) aus einer Aluminiumlegierung der 3xxx-Serie hergestellt ist, die Mn in einem Bereich von 0,5% bis 1,5% umfasst und Mg in einem Bereich von bis zu 0,15% liegt;
- die zweite Außenplatte (14) aus einer Aluminiumlegierung der 3xxx-Serie hergestellt ist, die Mn in einem Bereich von 0,5% bis 1,5% umfasst und Mg in einem Bereich von bis zu 0,15% liegt;
- die erste Außenplatte (12), und vorzugsweise sowohl die erste als auch die zweite Außenplatte (12, 14), auf ihrer dem Fluidströmungsdurchgang (18) zugewandten Seite mit einer Passivierungsschicht (13) bereitgestellt ist
- und die erste Außenplatte (12) auf ihrer dem Fluidströmungsdurchgang (18) zugewandten Seite mit einer plattierten Auskleidung (22) aus einer Aluminiumlegierung der 4xxx-Serie bereitgestellt ist, die bis zu 0,35% Mg aufweist, wobei die plattierte Auskleidung (22) zwischen der Aluminiumlegierung der 3xxx-Serie und der Passivierungsschicht (13) positioniert ist.

2. Batteriekühlplatte (10) nach Anspruch 1, wobei die Passivierungsschicht (13) eine Ti-Zr-Passivierungsschicht ist.

3. Batteriekühlplatte (10) nach Anspruch 2, wobei die Ti-Zr-Passivierungsschicht eine Summe von Ti und Zr in einem Bereich von 0,5 bis 50 mg/m², vorzugsweise 1 bis 25 mg/m², aufweist.

4. Batteriekühlplatte (10) nach Anspruch 2 oder 3, wobei das Ti/Zr-Verhältnis 1 bis 1,3 beträgt.

5. Batteriekühlplatte (10) nach einem der Ansprüche 1 bis 4, wobei die zweite Außenplatte (14) aus einer Aluminiumlegierung der 3xxx-Serie hergestellt ist, die Mn in einem Bereich von 0,5% bis 1,5% umfasst und Mg in einem Bereich von bis zu 0,15% beträgt, und auf ihrer dem Fluidströmungsdurchgang (18) zugewandt Seite ferner mit einer plattierten Auskleidung (22) aus einer Aluminiumlegierung der 4xxx-Serie bereitgestellt ist, die bis zu 0,35% Mg umfasst, wobei die plattierte Auskleidung (22) zwischen der Aluminiumlegierung der 3xxx-Serie und der Passivierungsschicht (13) positioniert ist.

6. Batteriekühlplatte (10) nach einem der Ansprüche 1 bis 5, wobei die erste Außenplatte (12) eine Dicke in einem Bereich von 0,2 mm bis 4 mm aufweist.

7. Batteriekühlplatte (10) nach einem der Ansprüche 1 bis 6, wobei die zweite Außenplatte (14) eine Dicke in einem Bereich von 0,2 mm bis 4 mm aufweist.

8. Batteriekühlplatte (10) nach einem der Ansprüche 1 bis 7, wobei die Dicke der plattierten Auskleidung (22) der ersten Außenplatte (12) in einem Bereich von 3% bis 20% der gesamten Außenplattendicke liegt.

9. Batteriekühlplatte (10) nach einem der Ansprüche 5 bis 8, wobei die Dicke der plattierten Auskleidung (22) der zweiten Außenplatte (14) in einem Bereich von 3% bis 20% der gesamten Außenplattendicke liegt.

10. Batteriekühlplatte (10) nach einem der Ansprüche 1 bis 9, wobei die erste Außenplatte (12) aus einer Aluminiumlegierung der 3xxx-Serie hergestellt ist, die in Gewichts-% umfasst:
0,5% bis 1,5% Mn, vorzugsweise 0,6% bis 1,2%,
bis 0,7% Cu,
bis 0,15% Mg,
bis 0,9% Si,
bis 0,7% Fe,
bis 0,2% Cr,
bis 0,25% Zr,
bis 0,2% Ti,
bis 1,2% Zn,
Rest Aluminium und Verunreinigungen.

11. Batteriekühlplatte (10) nach einem der Ansprüche 1 bis 10, wobei die zweite Außenplatte (14) aus einer Aluminiumlegierung der 3xxx-Serie hergestellt ist, die in Gewichts-% umfasst:
0,5% bis 1,5% Mn, vorzugsweise 0,6% bis 1,2%,
bis 0,7% Cu,
bis 0,15% Mg,
bis 0,9% Si,
bis 0,7% Fe,
bis 0,2% Cr,
bis 0,25% Zr,
bis 0,2% Ti,
bis 1,2% Zn,
Rest Aluminium und Verunreinigungen.

12. Batteriekühlplatte (10) nach einem der Ansprüche 1 bis 11, wobei die Aluminiumlegierung der 3xxx-Serie der ersten und zweiten Außenplatte (12, 14) in einem O-, H1- oder H2-Temper bereitgestellt sind.

13. Batteriemodul, umfassend einen Batteriepack, der mehrere voneinander beabstandete Batteriezellen umfasst, und mindestens eine Batteriekühlplatte (10) nach einem der Ansprüche 1 bis 12, die in thermischem Kontakt mit mindestens einer benachbarten Batteriezelle angeordnet ist, wodurch im Betrieb ein Kühlmittel durch einen Fluidströmungsdurchgang (18) in der Batteriekühlplatte (10) fließen kann, um eine benachbarte Batteriezelle zu kühlen.

14. Verfahren zur Herstellung einer Batteriekühlplatte (10) nach einem der Ansprüche 1 bis 12, umfassend die Schritte:
- Bereitstellen eines Blechmaterials (11) für eine erste Außenplatte (12) hergestellt aus der Aluminiumlegierung der 3xxx-Serie, das mindestens an einer Seite mit einer Passivierungsschicht (13) nach einem der Ansprüche 1 bis 4 bereitgestellt ist;
- Bereitstellen eines Blechmaterials (11) für eine zweite Außenplatte (14), hergestellt aus der Aluminiumlegierung der 3xxx-Serie und vorzugsweise an mindestens einer Seite mit einer Passivierungsschicht (13) nach einem der Ansprüche 1 bis 4 bereitgestellt;
- Stanzen eines Paares komplementärer Außenplatten (12, 14) unter Verwendung von einem oder mehreren Stempeln;
- Ausrichten des Paares komplementärer Außenplatten (12, 14), sodass die Passivierungsschicht (13) dem Fluidströmungsdurchgang oder -kanal (18) innerhalb des Hauptkörperabschnitts der Batteriekühlplatte (10) zugewandt ist; und
- Zusammenfügen des Paares komplementärer Außenplatten (12, 14) mittels Remote-Laserschweißen ohne Fülldraht um die Batteriekühlplatte (10) zu bilden.

15. Verfahren nach Anspruch 14, ferner umfassend den Schritt eines Einsetzens von Einlass- und Auslassverteilern in an den Außenplatten (12, 14) ausgebildeten Behältern, und wobei die Außenplatten (12, 14) zusammen mindestens einen Fluidströmungsdurchgang (18) bilden, wobei der Fluidströmungsdurchgang (18) ein Einlassende und ein Auslassende aufweist und der Fluidströmungsdurchgang (18) einen Einlassverteiler und einen Auslassverteiler aufweist, wobei der Einlassverteiler in Fluidverbindung mit dem Einlass des Fluidströmungsdurchgangs (18) steht und der Auslassverteiler in Fluidverbindung mit dem Auslassende des Fluidströmungsdurchgangs (18) steht.

## Revendications

1. Plaque de refroidissement de batterie (10) comprenant une partie principale ayant des extrémités opposées et une première et une deuxième surface extérieure définissant chacune une surface primaire de transfert de chaleur entre lesdites extrémités opposées,
- cette partie du corps principal comprend une première plaque extérieure (12) et une deuxième plaque extérieure (14) ;
- au moins un passage d'écoulement de fluide (18) formé à l'intérieur de ladite partie du corps principal entre lesdites première et seconde plaques extérieures (12, 14) ;
- le passage d'écoulement de fluide (18) ayant une première extrémité (30) pour l'entrée d'un fluide dans ledit passage d'écoulement de fluide (18) et une deuxième extrémité (32) pour l'évacuation dudit fluide dudit passage d'écoulement de fluide (18), lesdites première et deuxième extrémités (30, 32) définissant une direction d'écoulement à travers ledit passage d'écoulement de fluide (18) ;
- chacune de ces première et deuxième plaques extérieures (12, 14) comprend une partie centrale généralement plane (19) entourée d'un rebord périphérique (20) ;
- dans lequel les première et deuxième plaques extérieures (12, 14) ont été assemblées l'une à l'autre au moyen d'un soudage laser à distance ;
**caractérisé en ce que**
- la première plaque extérieure (12) est constituée d'un alliage d'aluminium de la série 3xxx comprenant du Mn dans une plage de 0,5 % à 1,5 % et du Mg dans une plage jusqu'à 0,15 % ;
- la deuxième plaque extérieure (14) est constituée d'un alliage d'aluminium de la série 3xxx comprenant du Mn dans une plage de 0,5 % à 1,5 % et du Mg dans une plage jusqu'à 0,15 % ;
- la première plaque extérieure (12), et de préférence la première et la deuxième plaque extérieure (12, 14), sur sa face tournée vers ledit passage d'écoulement de fluide (18), est pourvue d'une couche de passivation (13) ;
- et la première plaque extérieure (12), sur sa face tournée vers ledit passage d'écoulement de fluide (18), est en outre pourvue d'un revêtement (22) en alliage d'aluminium de la série 4xxx contenant du Mg jusqu'à 0,35 %, le revêtement (22) étant positionné entre l'alliage d'aluminium de la série 3xxx et la couche de passivation (13).

2. Plaque de refroidissement de batterie (10) selon la revendication 1, dans laquelle ladite couche de passivation (13) est une couche de passivation Ti-Zr.

3. Plaque de refroidissement de batterie (10) selon la revendication 2, dans laquelle ladite couche de passivation Ti-Zr présente une somme de Ti et de Zr dans une plage de 0,5 à 50 mg/m², de préférence entre 1 et 25 mg/m².

4. Plaque de refroidissement de batterie (10) selon la revendication 2 ou 3, dans laquelle le rapport Ti/Zr est compris entre 1 et 1,3.

5. Plaque de refroidissement de batterie (10) selon l'une des revendications 1 à 4, dans laquelle la seconde plaque extérieure (14) est constituée d'un alliage d'aluminium de la série 3xxx comprenant du Mn dans une plage de 0,5 % à 1,5 % et du Mg dans une plage jusqu'à 0,15%, et sur sa face tournée vers ledit passage d'écoulement de fluide (18) est en outre pourvue d'un revêtement (22) en alliage d'aluminium de la série 4xxx ayant un Mg jusqu'à 0,35%, le revêtement (22) étant positionné entre l'alliage d'aluminium de la série 3xxx et la couche de passivation (13).

6. Plaque de refroidissement de batterie (10) selon l'une des revendications 1 à 5, dans laquelle la première plaque extérieure (12) a une épaisseur dans la plage de 0,2 mm à 4 mm.

7. Plaque de refroidissement de batterie (10) selon l'une des revendications 1 à 6, dans laquelle la deuxième plaque extérieure (14) a une épaisseur dans une plage de 0,2 mm à 4 mm.

8. Plaque de refroidissement de batterie (10) selon l'une des revendications 1 à 7, dans laquelle l'épaisseur du revêtement (22) de la première plaque extérieure (12) est dans une plage de 3 % à 20 % de l'épaisseur totale de la plaque extérieure.

9. Plaque de refroidissement de batterie (10) selon l'une des revendications 5 à 8, dans laquelle l'épaisseur du revêtement (22) de la deuxième plaque extérieure (14) est dans une plage de 3 % à 20 % de l'épaisseur totale de la plaque extérieure.

10. Plaque de refroidissement de batterie (10) selon l'une des revendications 1 à 9, dans laquelle la première plaque extérieure (12) est fabriquée à partir d'un alliage d'aluminium de la série 3xxx comprenant, en % en poids,
0,5 % à 1,5 % Mn, de préférence 0,6 % à 1,2 %,
jusqu'à 0,7 % Cu,
jusqu'à 0,15 % Mg,
jusqu'à 0,9 % Si,
jusqu'à 0,7 % Fe,
jusqu'à 0,2 % Cr,
jusqu'à 0,25 % Zr,
jusqu'à 0,2 % Ti,
jusqu'à 1,2 % de Zn,
le reste étant de l'aluminium et des impuretés.

11. Plaque de refroidissement de batterie (10) selon l'une des revendications 1 à 10, dans laquelle la deuxième plaque extérieure (14) est fabriquée à partir d'un alliage d'aluminium de la série 3xxx comprenant, en % en poids,
0,5 % à 1,5 % Mn, de préférence 0,6 % à 1,2 %,
jusqu'à 0,7 % Cu,
jusqu'à 0,15 % Mg,
jusqu'à 0,9% Si,
jusqu'à 0,7% Fe,
jusqu'à 0,2 % Cr,
jusqu'à 0,25 % Zr,
jusqu'à 0,2 % Ti,
jusqu'à 1,2 % de Zn,
le reste étant de l'aluminium et des impuretés.

12. Plaque de refroidissement de batterie (10) selon l'une des revendications 1 à 11, dans laquelle l'alliage d'aluminium de la série 3xxx des première et deuxième plaques extérieures (12, 14) est fourni dans un état O, H1 ou H2.

13. Module de batterie comprenant un bloc-batterie comprenant plusieurs éléments de batterie espacés, et au moins une plaque de refroidissement de batterie (10) selon l'une des revendications 1 à 12 disposée en contact thermique avec au moins une cellule de batterie adjacente, de sorte qu'en fonctionnement, un liquide de refroidissement peut s'écouler à travers un passage d'écoulement de fluide (18) dans la plaque de refroidissement de batterie (10) pour refroidir une cellule de batterie adjacente.

14. Procédé de fabrication d'une plaque de refroidissement de batterie (10) selon l'une des revendications 1 à 12, comprenant les étapes suivantes,
- fournir un matériau en feuille (11) pour une première plaque extérieure (12) fait en alliage d'aluminium de la série 3xxx pourvue au moins sur une face avec une couche de passivation (13) selon l'une des revendications 1 à 4 ;
- fournir un matériau en feuille (11) pour une deuxième plaque extérieure (14) en alliage d'aluminium de la série 3xxx et de préférence pourvue au moins sur une face avec une couche de passivation (13) selon l'une des revendications 1 à 4;
- estamper une paire de plaques extérieures complémentaires (12, 14) en utilisant une ou plusieurs matrices ;
- aligner la paire de plaques extérieures complémentaires (12, 14) de sorte que la couche de passivation (13) soit orientée vers le passage ou le canal d'écoulement du fluide (18) à l'intérieur de la partie principale du corps de la plaque de refroidissement de la batterie (10) ; et
- joindre la paire de plaques extérieures complémentaires (12, 14) au moyen d'un soudage laser à distance sans fil d'apport pour former la plaque de refroidissement de la batterie (10).

15. Procédé selon la revendication 14, comprenant en outre l'étape consistant à insérer des collecteurs d'entrée et de sortie dans des réceptacles formés sur les plaques extérieures (12, 14), et dans lequel les plaques extérieures (12, 14) forment ensemble au moins un passage d'écoulement de fluide (18), le passage d'écoulement de fluide (18) ayant une extrémité d'entrée et une extrémité de sortie, et le passage d'écoulement de fluide (18) ayant un collecteur d'entrée et un collecteur de sortie, le collecteur d'entrée étant en communication fluidique avec l'entrée du passage d'écoulement de fluide (18) et le collecteur de sortie étant en communication fluidique avec l'extrémité de sortie du passage d'écoulement de fluide (18).
